# EUROPEAN PATENT APPLICATION

(11) **EP 3 109 755 A1**
(43) Date of publication of application: **28.12.2016**
(21) Application number: 15290167.4
(22) Date of filing: 26.06.2015
(51) Int. Cl.: G06F 9/44

(54) **ACTIVATION OF FUNCTIONS THROUGH DYNAMIC ASSOCIATION OF ATTRIBUTES AND FUNCTIONS AND ATTRIBUTE-BASED SELECTION OF FUNCTIONS**

(71) Applicant: Doro AB, 226 43 Lund (SE)
(72) Inventor: Déprés, Nicolas, 92240 Malakoff (FR); Poulet, Kévin, 93330 Neuilly-sur-Marne (FR); Chevallier, Arthur, 75018 Paris (FR); Noell, Francois, 75013 Paris (FR); Freund, Emmanuel, 75014 Paris (FR)
(74) Representative: Ström & Gulliksson AB

(57) **Abstract**

A computing device comprising a memory and a controller, wherein said memory is configured to store a plurality of applications, each application comprising at least one function, and wherein said controller is configured to receive a selection of a task to be performed through: receiving a selection of an action; receiving a selection of a subject/object associated with the selected action; and receiving a selection of a function associated with the selected subject/object; and to perform said task by causing said function to be executed based on the selected subject/object, wherein selections of the action, the subject/object and the function are received in the order of action, subject/object and function.

## Description

### TECHNICAL FIELD

This application relates to a method, a computing device such as a mobile communications terminal, and a computer-readable storage medium for improved function execution.

### BACKGROUND

Contemporary computers and smartphones, including laptops and computer tablets, are commonly arranged with a plethora of applications. Many of these applications are also enabled to interact with one another requiring that more than one application is activated to execute a specific task. Finding a function representing such a specific task may therefore be difficult requiring that many display views and/or menu hierarchies are traversed and in doing so having to load and optionally also activate many applications. This requires a lot of processing power to execute, a lot of memory space for storing the instances for various applications, time for loading the applications into higher memories and also user actions and selections for reaching the desired functions resulting in an excessive use of processing power, memory space as well as display space and memory for displaying the plethora of applications and time.

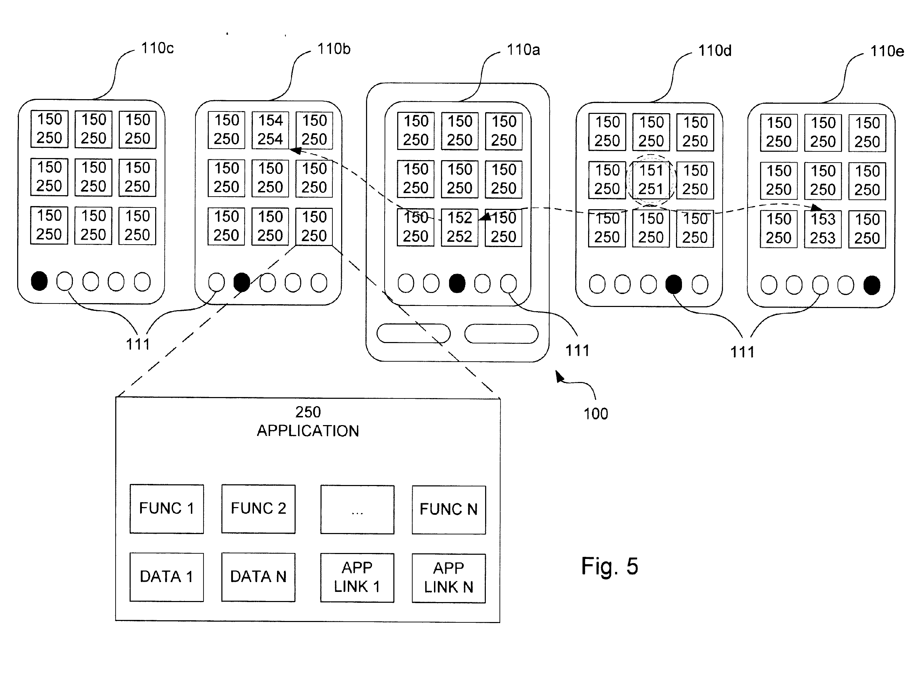

The underlying problems will be discussed in greater detail, predominantly with reference to figure 5 in the detailed description.

There is thus a need for a system where a function corresponding to a task may be found more efficiently without wasting processing power, memory space and display memory and space.

### SUMMARY

It is an object of the teachings of this application to overcome the problems listed above by providing a computing device comprising a memory and a controller, wherein said memory is configured to store a plurality of applications, each application comprising at least one function, and wherein said controller is configured to receive a selection of a task to be performed through: receiving a selection of an action; receiving a selection of a subject/object associated with the selected action; and receiving a selection of a function associated with the selected subject/object; and to perform said task by causing said function to be executed based on the selected subject/object, wherein selections of the action, the subject/object and the function are received in the order of action, subject/object and function.

In one embodiment the computing device is a mobile communications terminal such as a smartphone.

It is an object of the teachings of this application to overcome the problems listed above by providing a method for use in a computing device comprising a memory and a controller, wherein said memory is configured to store a plurality of applications, each application comprising at least one function, and wherein said method comprises receiving a selection of a task to be performed through: receiving a selection of an action; receiving a selection of a subject/object associated with the selected action; and receiving a selection of a function associated with the selected subject/object; and performing said task by executing said function based on the selected subject/object, wherein selections of the action, the subject/object and the function are received in the order of action, subject/object and function.

It is also an object of the teachings of this application to overcome the problems listed above by providing a computer program product possibly stored on a computer-readable medium for implementing any of the methods according to the above.

It is also an object of the teachings of this application to overcome the problems listed above by providing a computer-readable storage medium encoded with instructions that, when executed on a processor, perform the method according to above.

The inventors of the present invention have realized, after inventive and insightful reasoning, that by arranging functions according to what actions they perform and of what attributes the action is to be performed upon provides for selection and execution of a function corresponding to a task in a more efficient manner as will also be discussed in greater detail in the detailed description.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The teachings herein will be described in further detail under reference to the accompanying drawings in which:
Figures 1A, 1B, 1C and 1D each shows a schematic view of a computing device according to each one embodiment of the teachings of this application;
Figure 2 shows a schematic view of the general structure of a computing device according to one embodiment of the teachings of this application;
Figure 3 is a schematic view of a memory and controller architecture;
Figure 4 is a schematic view of an example application;
Figure 5 shows a schematic overview of a computing device, in the example a smartphone, showing a common presentation of available applications through their corresponding graphical representations according to a contemporary manner;
Figure 6 shows an illustration of the categorization and an example of such a categorization according to one embodiment of the teachings herein;
Figure 7 shows an illustration of an example embodiment for providing a user interface, for receiving control inputs through, arranged on a computing device according to one embodiment of the teachings herein;
Figure 8 shows a schematic example of how functions may be loaded into a higher level memory of the schematic example controller memory architecture of figure 3 according to one embodiment of the teachings herein;
Figure 9 shows an illustration of the example of figure 6 being applied to the embodiment of figure 7 according to one embodiment of the teachings herein;
Figure 10 shows a flowchart of a general method according to one embodiment of the teachings herein;
Figure 11 illustrates how a controller is able to identify a specific and individual function from a memory space of functions comprised in applications according to one embodiment of the teachings herein;
Figure 12 shows a flowchart for a general method for displaying a reduced subset of an expanded set according to one embodiment of the teachings herein; and
Figure 13 shows a schematic view of a computer-readable medium according to one embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

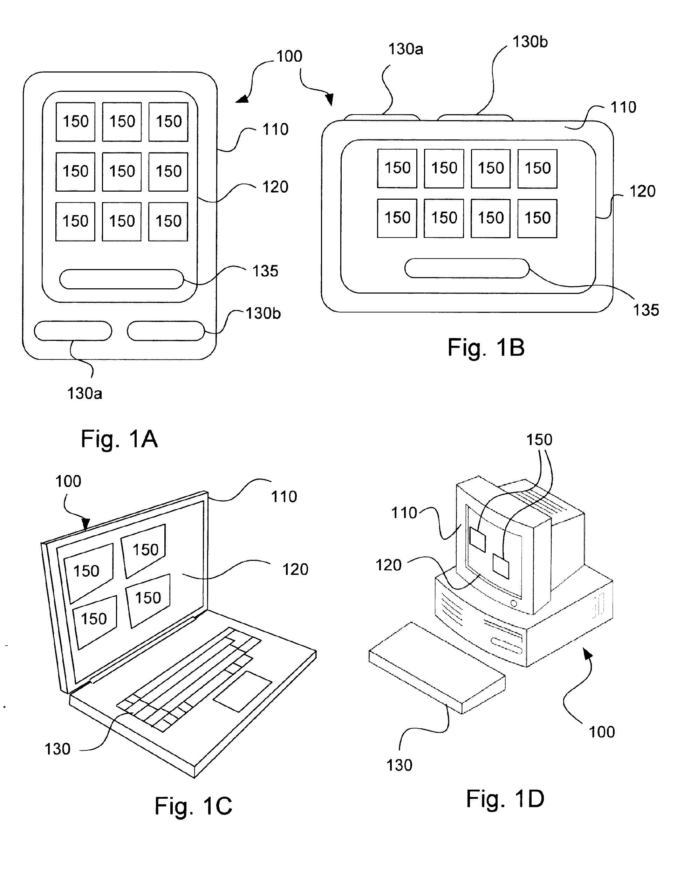

Figures 1A, 1B, 1C and 1D each shows a schematic overview of each a computing device 100 adapted according to the teachings herein. In one embodiment, the computing device 100 is a computer, such as a desktop computer as shown in figure 1D, or a laptop computer as is shown in figure 1C.

In one embodiment the computing device 100 is a communications terminal, such as a desktop computer arranged with a modem or other communication interface as shown in figure 1D, a laptop computer arranged with a modem or other communication interface as is shown in figure 1C, a tablet computer arranged with a modem or other communication interface as is shown in figure 1B, or a mobile telephone, such as a smartphone as is shown in figure 1A.

In one embodiment the computing device 100 is a mobile computing device, such as a laptop computer arranged as is shown in figure 1C, a tablet computer as is shown in figure 1B, or a mobile telephone, such as a smartphone as is shown in figure 1A.

In one embodiment the computing device 100 is a mobile communications terminal, such as a laptop computer arranged with a modem or other communication interface as is shown in figure 1C, a tablet computer arranged with a modem or other communication interface as is shown in figure 1B, or a mobile telephone, such as a smartphone as is shown in figure 1A.

In one embodiment the computing device 100 is a touch based mobile communications terminal, such as a tablet computer (possibly arranged with a modem or other communication interface) as is shown in figure 1B or a mobile telephone, such as a smartphone, as is shown in figure 1A.

In other embodiments the computing device 100 is a personal digital assistant, a media player, a location finding device or any hand-held device capable of executing a variety of applications.

The various embodiments will be disclosed with simultaneous reference to figures 1A, 1B, 1C and 1D. The computing device 100 comprises a housing 110 in which a display 120 is arranged. In one embodiment the display 120 is a touch display, this is the predominant (but not only) embodiment for figures 1A and 1B. In other embodiments the display 120 is a non-touch display, this is the predominant (but not only) embodiment for figures 1C and 1D. Furthermore, the computing device 100 comprises a keypad 130. In the embodiments of figures 1A and 1B there are two keys 130. In the embodiments of figures 1C and 1D there are a keypad (possibly QWERTY, AZERTY or other style) as well as various control keys (ON/OFF, display controls, et.c.) 130.

In one embodiment the computing device 100 (especially the embodiments of figures 1A and 1B) is configured to display and operate a virtual key 135 on the touch display 120. It should be noted that the number of virtual keys 135 are dependent on the design of the computing device 100 and an application that is executed on the computing device 100.

In one embodiment the mobile communications terminal 100 and/or the tablet computer of figures 1A and 1B respectively comprises an ITU-T keypad or a QWERTY (or equivalent) keypad in addition to or as an alternative to a touch-sensitive display. In an embodiment where the keypad is an alternative to a touch-sensitive display, the display 120 may be a non-touch-sensitive display. The keypad may of course also be a QWERTY style keyboard while the display is a touch display.

The computing device 100 is arranged to execute a plurality of applications, upon user activation. Such applications are commonly represented by a graphical representation 150 shown on the display for user selection and execution.

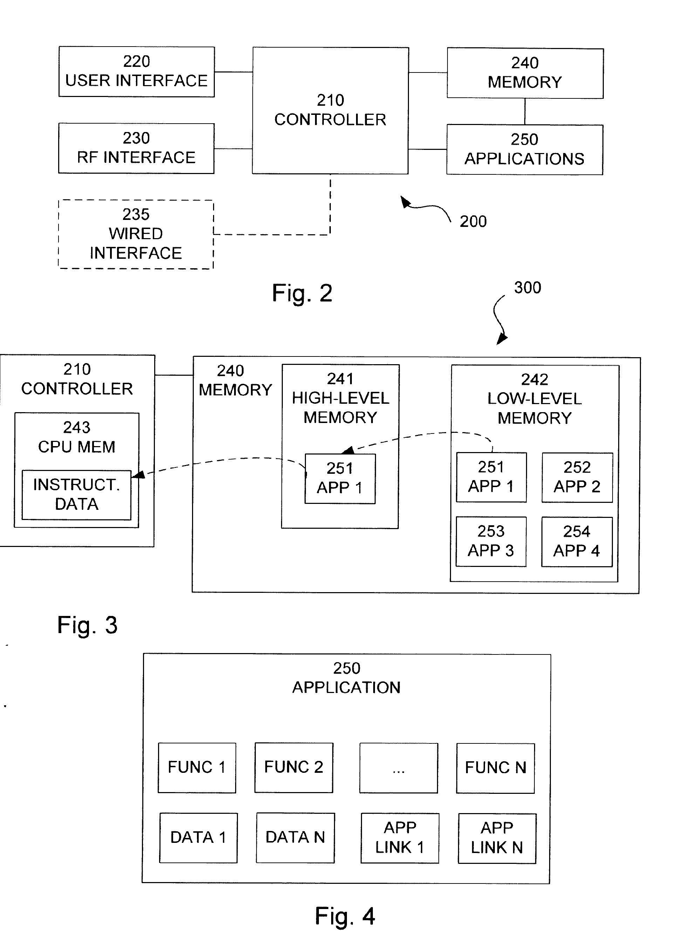

Figure 2 shows a schematic view of the general structure of a computing device 200 (100) according to figure 1. The computing device 200 comprises a controller 210 which is responsible for the overall operation of the computing device 200 and is preferably implemented by any commercially available CPU ("Central Processing Unit"), DSP ("Digital Signal Processor") or any other electronic programmable logic device. The controller 210 is implemented using instructions that enable hardware functionality, for example, by using computer program instructions executable in a general-purpose or special-purpose processor that may be stored on a computer readable storage medium (disk, memory etc) 240 to be executed by such a processor. The controller 210 is configured to read instructions from the memory 240 and execute these instructions to control the operation of the computing device 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal. The software modules include a real-time operating system, an application handler as well as various applications 250 represented by the graphical representations 150. The applications 250 are sets of instructions that when executed by the controller 210 control the operation of the computing device 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, et.c..

The applications 250 are typically represented by the graphical representations 150, but in the following both the application and its representation will be referred to as one and the same unless explicitly stated otherwise. As a user selects an application 250 it will be understood that the user selects the application 250 by touching (or otherwise indicating) the corresponding graphical representation 150. Selecting an application directly may be done in the same manner in a computing device according to the teachings herein as in prior art systems.

The computing device 200 further comprises drivers for a user interface 220, which in the computing device 100 of figure 1 is comprised of the display 120, the keys 130, 135, a microphone and a loudspeaker. The user interface (UI) drivers 220 also includes one or more hardware controllers, which together with the UI drivers cooperate with the display 120, keypad 130, as well as various other I/O devices such as microphone, loudspeaker, vibrator, ringtone generator, LED indicator, etc. As is commonly known, the user may operate the mobile terminal through the man-machine interface thus formed.

The computing device 200 may further comprise a radio frequency interface 230, which is adapted to allow the computing device to communicate with other computing devices in a radio frequency band through the use of different radio frequency technologies. Examples of such technologies are W-CDMA, GSM, UTRAN, LTE and NMT to name a few. The embodiment of figure 1A always comprises such an interface. Each of the embodiments of figures 1B, 1C and/or 1D may alternatively be arranged with such an interface.

The controller 210 is configured to operably execute some of the applications 250, such as the voice call and message handling applications, through the RF interface 230 and software stored in the memory 240, which software includes various modules, protocol stacks, drivers, etc. to provide communication services (such as transport, network and connectivity) for the RF interface 230, and optionally a WiFi interface, Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, i.e., band pass filters, amplifiers, mixers, local oscillators, low pass filters, AD/DA converters, etc.

In one embodiment the computing device 200 further comprises a wired interface 235 (indicated with a dashed line in figure 2 as this is an optional feature), which is adapted to allow the terminal to communicate with other devices through the use of different network technologies. Examples of such technologies are USB (Universal Serial Bus), Ethernet, Local Area Network, and TCP/IP (Transport Control Protocol/Internet Protocol) to name a few.

The RF interface 230 and the wired interface 235 are examples of device communication interfaces that enable communication between the computing device 200 and another device.

Figure 3 shows a schematic view of a memory 240 and controller 210 architecture 300. As would be apparent to a skilled person, many variations exist and are also possible and the teachings of figure 3 should therefore be accepted in its broadest sense. The memory 240, which may be a memory 240 such as in figure 2, most often comprises different layers arranged in a memory hierarchy. In figure 3 only two such levels are illustrated; a high-level memory 241 and a low-level memory 242. Commonly high-level memories are faster, but smaller (to save on cost) whereas low-level-memories are larger, but slower (to enable a large amount of data to be saved). To keep execution times to a minimum an application 250 is stored in a low-level memory 242 until it is to be executed upon, which it is loaded (or copied) into a higher-level memory 241 which may provide faster memory access for the controller. Typically there are at least three memory levels in a modern computing device; a long term storage such as a hard drive, a faster and smaller short term memory such as a RAM commonly referred to as an internal memory and a cache memory being very fast and also very small for storing the instructions and data being handled at the moment by the processor.

As an instruction or set of instructions are to be executed on data, those instruction(s) and that data are loaded into a register or controller (CPU) memory 243 (possibly also being part of the memory 240) upon which the controller 210 operates.

As stated above, there are so many different possibilities to how a memory structure is implemented that figure 3 is only to be taken as a schematic illustration of the general principle of having different memory levels showing how an application and its software instructions are loaded into higher levels when being about to be executed.

Figure 4 shows a schematic illustration of an example application 250 trying to visualize the memory consumption required by an application 250. The application 250 contains instructions for various functions (FUNC 1, FUNC 2 ... FUNC N). Such instructions consume memory space when they are stored. The application 250 further contains various application data (DATA 1 ... DATA N) used when executing the functions FUNC. The application 250 may further contain various links to other applications (APP LINK 1 ... APP LINK N) for possible collaboration on a task not fully supported by one application alone.

As an application is to be executed, the whole application is loaded into a higher memory and as contemporary applications are generally of a large size, they consume a lot of memory space.

Figure 5 shows a schematic overview of a computing device 100, in this example a smartphone, showing a common presentation of available applications 250 through their corresponding graphical representations 150 as is also done in contemporary systems to illustrate a problem of contemporary systems. In figure 5, both the graphical representation 150 and the corresponding application 250 are referenced to indicate their close correspondence.

As can be seen in figure 5, the computing device 100 is configured to display one or more display views 110a-e for enabling enough display space to accommodate all applications 150/250. In the example of figure 5, five such display views 110a-e are shown. An indicator 111 may be arranged to indicate which display view 110a-e is the current display view 110a-e. Each display view 110a-e comprises a number of applications 150/250, each corresponding to an application 250 as in figure 4 as is indicated in figure 5 by the dashed lines leading to an application block 250.

In the example of figure 5, an application 151/251 has been selected in the fourth display view 110d from the left, as is indicated by the dashed double circle. This first app 151/251 may contain links to other applications 150/250 and in the example of figure 5, two such links are contained in the first app 151/251, namely a link to a second application 152/252 and a link to a third application 153/253, the links being indicated by dashed arrows. The linked applications may further contain links to other applications and in the example of figure 5 the second application 152/252 contains a link to a fourth application 154/254. To properly load all possible functionalities of the first application, all four applications 151/251-154/254 may thus be loaded into a higher memory.

Furthermore, should the application links be implicit in that an operator must select all linked applications to actively initiate them before they can be made to collaborate, the operating system of the computing device 100 must receive numerous inputs for scrolling between different views, for selecting the linked to applications and the controller must then allot processor time and memory space for initiating them.

Thus, when a user of a contemporary system wants to execute a function in an application, the controller 210 must load the application from a low-level memory 242 to a high-level memory 241 (see figure 3) requiring both (processor) time and memory space.

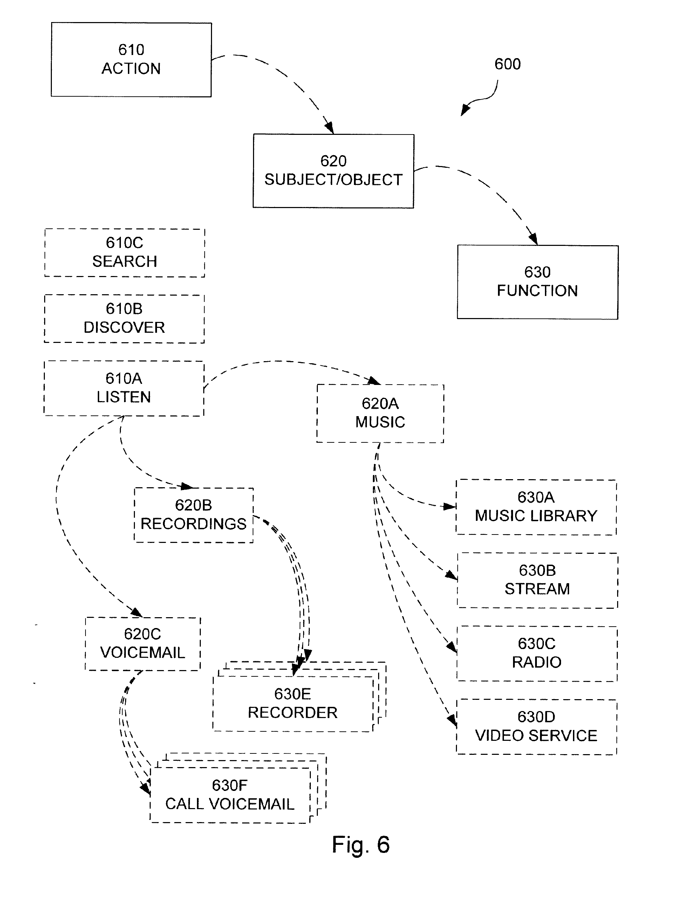

To enable for a faster access to a wanted function the inventors of the present application have realized that by providing a novel application handler in an operating system for a computing device, which application handler is designed around an action-based categorizing of functions. Figure 6 shows an illustration of the categorization and an example of such a categorization. The categorization is based on that all user actions are grouped into different main actions 610. The operating system being executed by the controller 210 may thus receive an indication of an action 610 to be performed. A main action may be performed in a number of manners and on a number of objects/subjects, and normally the manner for performing the action would be chosen first, but the inventors have realized that by specifying the object/subject first, a reduction in (or filtering of) functions available is automatically provided as all functions will not be available for all subjects/objects. Therefore associated with each main action 610 is a subject and/or object 620 (being a subject or an object depending on the action), and associated with each subject/object 620 based on the association with the main action 610 is a function 630.

An example is shown in figure 6 where three main actions are shown; LISTEN 610A for listening to something, DISCOVER 610B for exploring something through the device, and SEARCH 610C for generating or creating something. For illustrating purposes and lack of drawing space, only the subjects/objects and associated functions for the main action LISTEN 610A are shown. The subjects/objects and associated functions for the main action LISTEN 610A are to Listen to music 620A, Listen to recordings 620B, and Listen to voicemail 620C. The subject Listen to music 620A is associated with the functions Open the music library 630A, Open a music streaming application 630B, Open a Radio application 630C and Open a video service for playing music videos 630D. The subject Listen to recordings 620B is at least (as is indicated by the hidden boxes) associated with the function(s) Open recording application 630E. The subject Listen to voicemail 620C is at least (as is indicated by the hidden boxes) associated with the function(s) Call Voicemail box 630F.

The subjects/objects and associated functions for the main action DISCOVER 610B may be to discover a file, discover a webpage, and discover a feature of the device which are associated with the functions Open file manager and go to file address, Open web browser and go to web page and Open tutorial for the feature, respectively.

The subjects/objects and associated functions for the main action SEARCH 610C may be to Search the internet, Search the device, Search address, Search a contact, Search an establishment in the neighborhood which are associated with the functions Open web browser, Open the file manager, Open a maps application, Open a Contacts application, and Open a maps application with current location indicated, respectively.

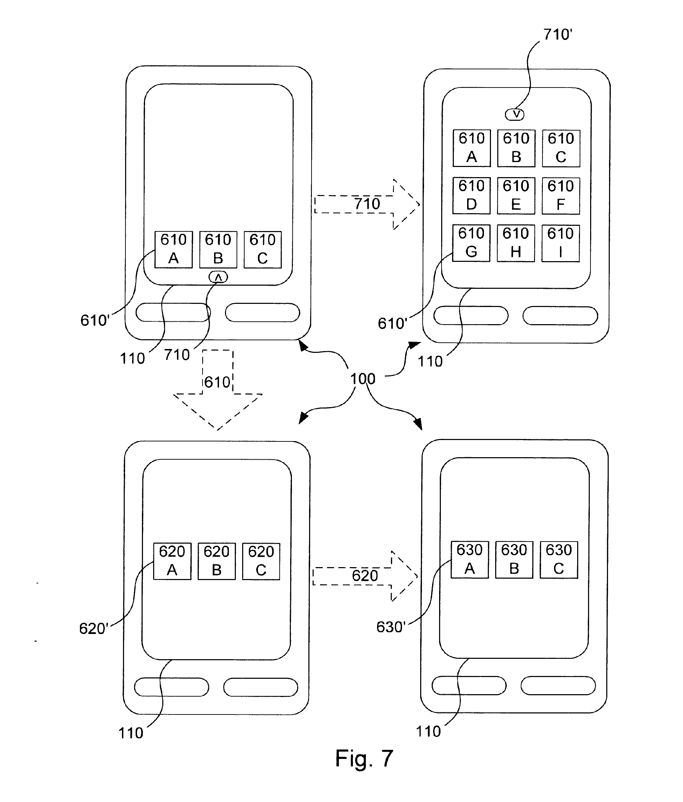

Figure 7 shows an illustration of an example embodiment for providing a user interface for receiving control inputs through, the user interface being arranged on a computing device 100, in this example being a smartphone. An array of main actions 610A-610C is presented for selection by displaying their graphical representations 610' on the display 110. As for applications 250 and the graphical representation of an application 150, there will not be made any difference between the graphical representation 610' and the action 610 being represented herein. See the smartphone in the top-left corner of figure 7. As the controller receives a selection of an action (indicated by the dashed arrow labeled 610), the corresponding subjects/objects 620A-620C are displayed - or rather their graphical representations 620' are displayed on the display 110, see the smartphone in the bottom-left corner of figure 7. As the controller 210 receives a selection of a subject/object (indicated by the dashed arrow labeled 620), the corresponding functions 630A-630C are displayed - or rather their graphical representations 630' are displayed on the display 110, see the smartphone in the bottom-right corner of figure 7.

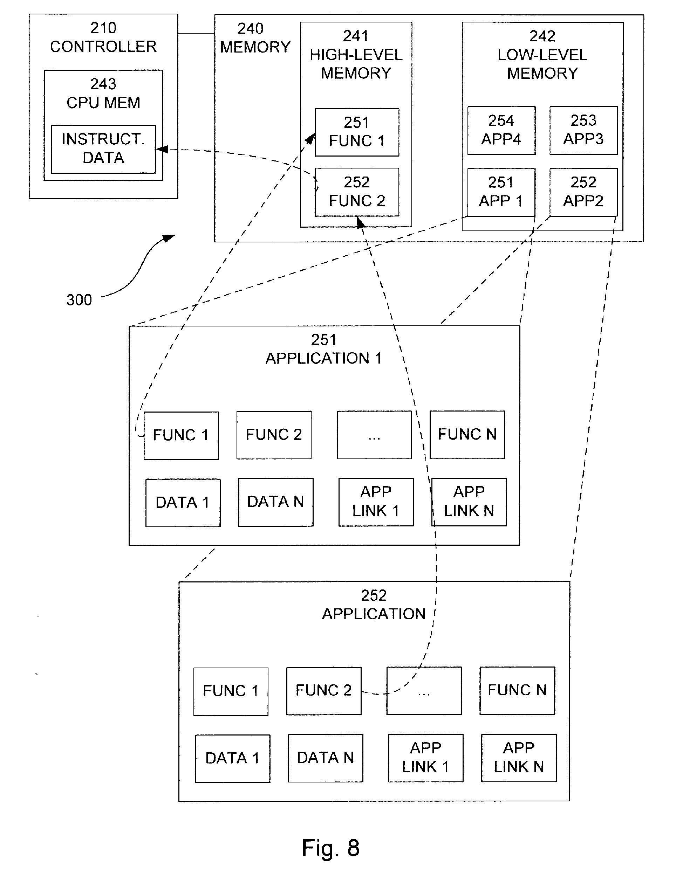

Returning to the schematic and highly exemplary controller and memory structure 300 of figure 3, figure 8 shows an illustration of how the application handler of the new operating system may handle the loading of instructions. As would be apparent to a skilled person many variations exist and a real life implementation would have to be adapted to an existing controller memory architecture, whereas figure 8 illustrates the principle teaching a skilled person how to adapt an existing architecture or to design a new architecture so that the teachings herein may be implemented. As an action is selected (arrow 610 in figure 7) and a corresponding subject/object 620 is selected (arrow 620 in figure 7), the associated functions are loaded onto the high-level memory 241. Compared to the example of figure 5, instead of loading the whole application selected 251 and possibly the linked applications 252, 253 and 254, only the associated functions for the respective applications 250 are loaded, in this example perhaps the functions FUNC 1 for application APP1 251 and FUNC 2 for application APP2 252, requiring much less memory space and therefore also much less loading time. Alternatively only the linked (final) function is loaded.

In one embodiment, wherein a first function in a first application is linked to a second function in a second application and wherein the controller is configured to load the software instructions for executing the first and the second function from a low-level memory 242 into a high-level memory 241 without loading the whole first application 251 and the whole second application 252.

In one embodiment, wherein a first function in a first application is linked to a second function in a second application and wherein the controller is configured to load the software instructions for executing the second function from a low-level memory 242 into a high-level memory 241 without loading the first application 251.

It should be noted, as would be appreciated by a skilled person, that since there are so many variations of available memory structures and memory handlers, the scheme illustrated in figure 8 (showing an example of how functions are loaded into a higher level memory instead of applications) is a schematic scheme designed to illustrate the principle. Various details may thus differ from a real-life implementation possibly with regards to what exactly is loaded and into what memory, the number of levels and the exact storage location of various components to name a few examples of details that may differ.

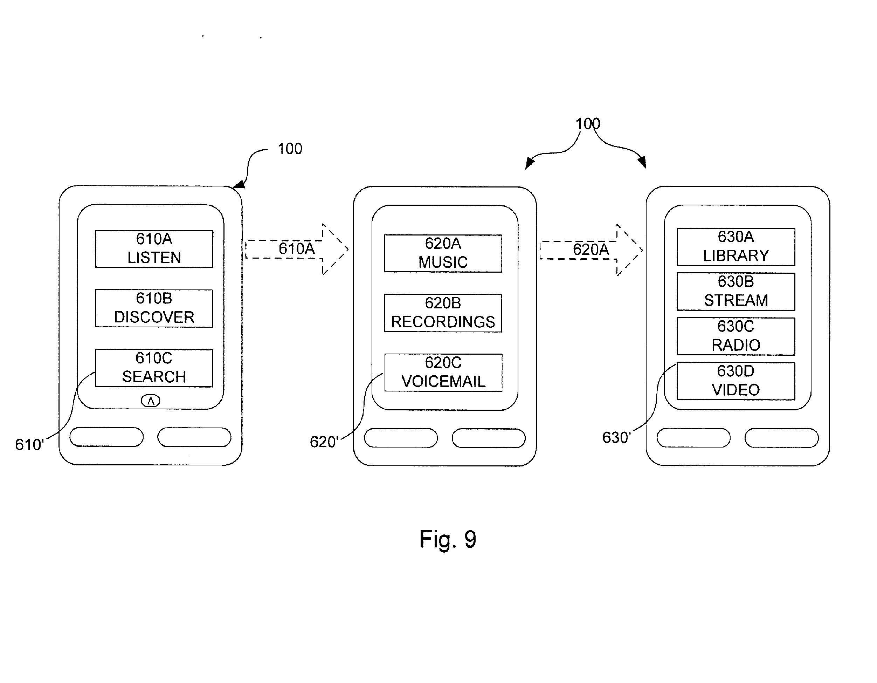

Figure 9 shows an illustration of the example of figure 6 being applied to the embodiment of figure 7. The visual arrangement of the graphical representations has been changed compared to figure 7 to allow space for descriptive labels in the illustration, but also indicates that other visual arrangements are possible having different advantages as concerns display space and memory consumption.

The teachings herein thus provide for a manner of providing access to a function based on attributes received from an operator in a dynamic menu structure wherein, while selecting a function, the attributes on which the function should be executed may be given as part of selecting the function and/or as part of the attributes provided, whereby the function is invoked on those attributes.

This allows for selecting the function for execution without traversing a traditional application menu or view to load and open an application for traversing an applications option menu structure, thereby saving time, saving memory space and loads, and requiring fewer user actions speeding up the operation of executing a desired function.

As has been stated above, the teachings herein may thus be used to reduce the number of memory loads and also memory swaps, reduce processing speed for handling selections and memory loads, reduce the higher-level memory space needed and enables faster selection and thereby execution of a function.

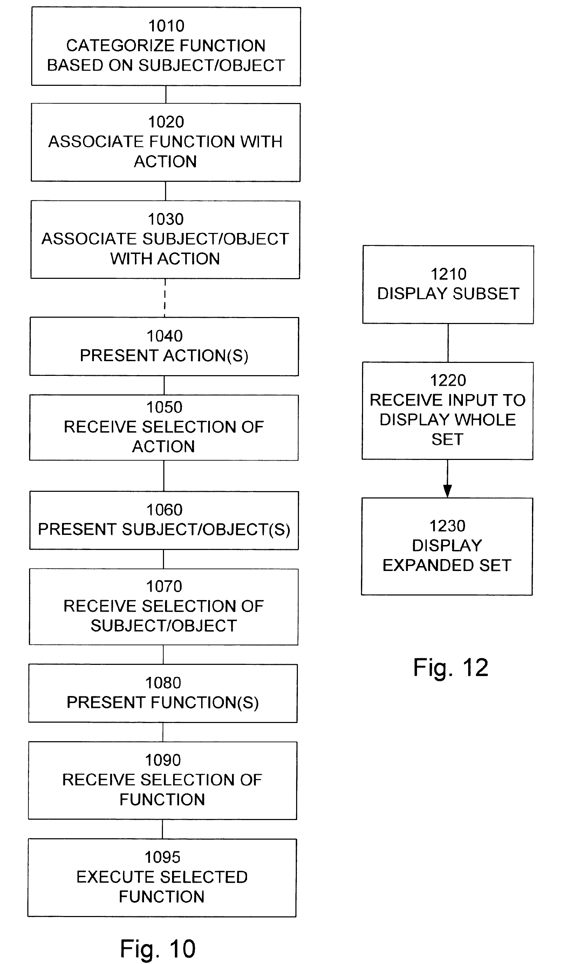

Figure 10 shows a flowchart of a general method according to the teachings herein. It should be noted that the flowchart need not be executed concurrently, but different portions may be executed at different times.

The functions of various applications are categorized 1010 based on the objects/subjects that they operate on - either using as input or producing as outputs. For example the media player operates on music files. The functions are then or before categorized based on the tasks that they perform and thereby associated 1020with an action, optionally through the file types they operate on, and the objects associated with a function associated with an action are transitively associated with the action 1030. Alternatively or additionally the subject/object is associated directly with the action based on the file type of the subject/object, the file type indicating a normal use of such a file. It should be noted that although the disclosure herein focuses on one function being associated with one action (and one object/subject) there may be a one to many or a many to many relationship between either instances. For example, the function of playing a video may be associated with both the action LISTEN (for listening to the music in music videos) and the action VIEW (for viewing a film or other video).

The categorization is in one embodiment based on the file types. A file type for a subject/object implicitly specifies what tasks the subject/object is arranged to perform. A music file is to be listened to, a text document is for reading and/or creating text, an image file is for viewing and/or creating, and so on to mention a few examples. Subject/objects may thus be associated with an action through their file type. A function usually carries some meta information, or such meta information is stored in a table in the memory for the operating system, the meta information matching file types with functions that are able to operate on or handle such file types. If the meta information is carried by the function, the meta information indicates what file types can be handled. If the meta information is stored for the operating system, the meta information indicates what file types are handled by what function.

This categorization as is described with reference to 1010 to 1030, for example, may be performed dynamically, such as being specified through an application interface, or it may be set by the designer of the operating system, or both. The categorization is preferably performed at an earlier phase than when presenting the available options for selection, such as upon installation of the operating system and/or when a new application is added or installed.

As the categorization has been made, the actions 610 may be displayed 1040 as in figure 7 or figure 9 for presenting an operator with an opportunity to select an action to be taken. As an operator selects an action 610, the controller receives such a selection 1050 and in response thereto displays 1060 the subject(s)/objects(s) 620. As an operator selects a subject/object 620, the controller receives such a selection 1070 and in response thereto displays the function(s) 1080.

As an operator selects a function, the controller receives such a selection 1090 and in response thereto causes the function 630 to be executed 1095 based on the selected subject/object 620 for completing the selected action 610 for performing the desired task.

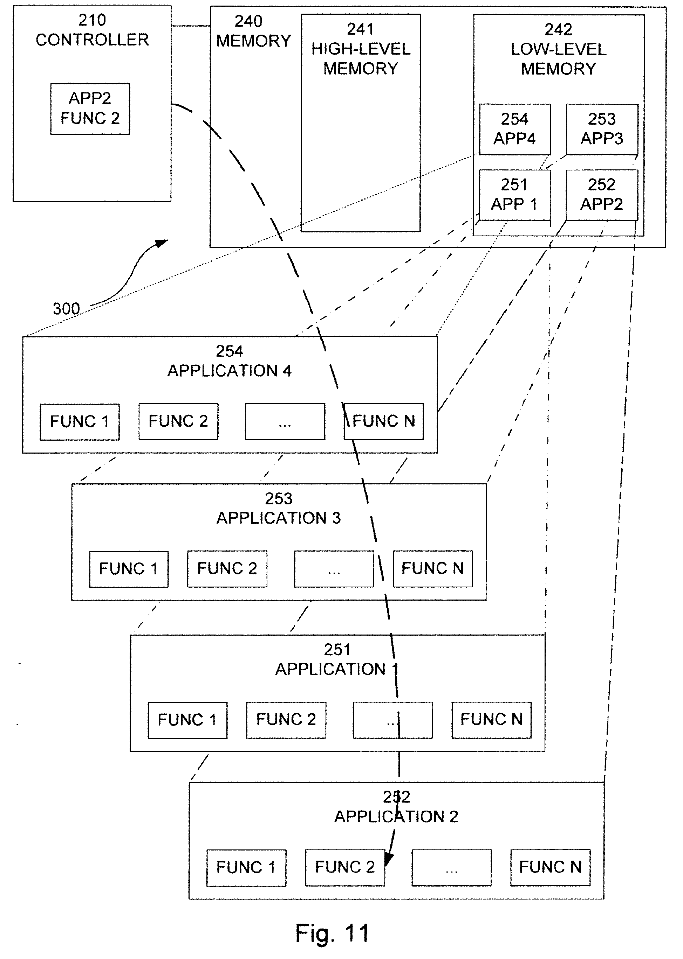

The controller is thus configured to identify a function to be executed from a plurality of functions, each function being comprised in an application, based on selections of actions and subjects/objects, and causing the execution of the function based on the selections without traversing an application menu. Figure 11 illustrates how the controller is able to identify a specific and individual function from a memory space of functions comprised in applications. As an operator wishes to listen to music, the controller, having previously grouped all functions associated with the action of listening, presents a listening action among other possible actions, and receives a selection of the action LISTEN. The functions are further associated with the attributes they are able to handle (music file, pod cast, music streaming, video, ...) and the controller also receives a selection of an attribute.

The attribute relates to the subject/object that the functions are able to handle. The controller then receives a selection of a function capable of executing the wanted action on the attribute and then causes the function to be executed. The function is caused to be executed by being moved into a higher memory level and then executed by the controller.

The function is thus selected and caused to execute in as little as three simple steps requiring only a loading of the software instructions controlling the function and the data of the function.

The controller is configured to present the actions available, and in response to receiving a selection of an action, displaying available attributes, and in response to receiving a selection of an attribute, present the available functions. In one embodiment, the controller may also receive input on a parameter to be used along with or instead of an attribute. Examples of such parameters are file names, links, or function values (such as addresses for a map application for example).

As has been mentioned before, attributes are represented by subjects/objects throughout this application.

The actions combined with the attributes thus define the task to be performed and the function causes the task to be performed when the function is executed.

The controller is thus enabled to identify a function (and its corresponding software instructions) that are to be loaded and executed out of a vast function space made up of all the functions of the plethora of applications stored on or accessible through the computing device as is indicated by the dashed arrow of figure 11, indicating that the controller shortcuts all the applications and locates the function directly for loading into a higher level memory.

This is made in a dynamic manner as if a function is added (the first of its sort), the selection of the function will now have one more function to choose from. For example if the computing device previously had no media files stored, and a music file was added, the further attribute of playing a file from the music would be added to the function choice.

The same applies to the attributes, wherein if a new attribute is added, such as a new media type file (for example recordings), that attribute would be added, and also all the functions capable of executing such a file type would be associated with the new attribute. Identifying the functions capable of executing a file type is discussed with reference to the categorization above, and as is known to a skilled person many alternatives of doing this may exist.

The hierarchy of the present invention may thus be updated to include new functions and attributes dynamically.

The teachings herein thus provide for a manner of finding and executing a function in a manner without wasting processing power, memory space and display memory and space. Especially the reduction of display views that need to be displayed and scrolled (as in figure 5) saves on display space and display memory.

It should be noted that the function when executed may provide an application menu hierarchy that is to be traversed. There is, however, a difference in traversing an initial application hierarchy compared to traversing a function selected hierarchy, as in that the latter may comprise preselected options enabling a user to more efficiently executing a wanted task.

Returning to figure 7, to allow for a greater number of actions to be displayed without consuming too much display area, only a reduced set of the available actions 610A-610C are displayed on the smartphone 100 of the top-left corner of figure 7. An indicator 710 is also displayed indicating that more options are available for selection. If the controller receives a selection of the indicator 710 (as is indicated by the dashed arrow labeled 710), the controller 210 will display an expanded set of actions 610A-610I of which the reduced set is a subset of. Thus the actions 610A-610C - which would represent the most used actions - are thus shown in both the reduced view of the smartphone 100 of the top-left corner of figure 7 and in the expanded view of the smartphone 100 of the top-right corner of figure 7. In this view, an indication that the view may be reduced is also displayed 710'. Upon receiving a selection of this indication 710', the reduced subset is again displayed, returning to the display of the smartphone 100 of the top-left corner of figure 7.

Even though this manner of presenting a reduced subset has been disclosed with reference to displaying main actions 610, it may also be used for displaying other selectable objects or icons, such as the subject/objects 620, the functions 630 or other icons/objects.

This provides for a manner of displaying a subset of an expanded set thereby providing access to the most relevant objects without wasting display space and memory space. Also since the graphical representations of the not displayed - lesser used - options are not needed and therefore not loaded into the memory 240.

Figure 12 shows a flowchart for a general method for displaying a reduced subset of an expanded set, wherein a subset is first displayed 1210. As an indication to show the expanded set is received 1220, the expanded view is shown 1230. As is shown in figure 7, the reduced set (or rather the graphical representations of the reduced set) maintains the same order whether it is being displayed as a reduced set or an expanded set. It should be noted that the displaying of a reduced set and an expanded set as disclosed in the above, may also be used for displaying other objects/graphical representations, such as menu items, gallery items, and so on.

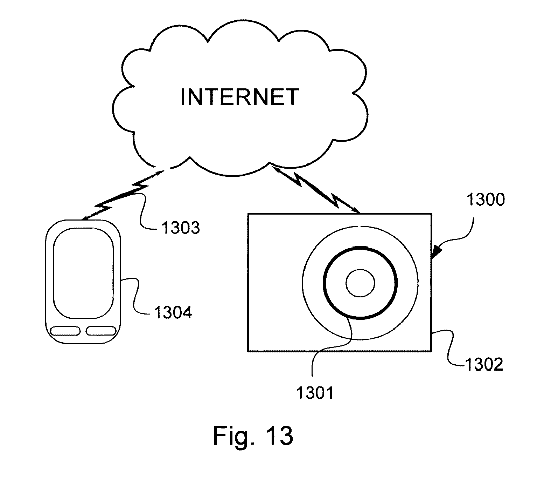

Figure 13 shows a schematic view of a computer-readable storage medium, as described in the above. The computer-readable medium 1300 is in this embodiment a data disc 1300. In one embodiment the data disc 1300 is a magnetic data storage disc. The data disc 1300 is configured to carry instructions 1301 that when loaded into a controller, such as a processor, executes a method or procedure according to the embodiments disclosed above. The data disc 1300 is arranged to be connected to or within and read by a reading device 1302, for loading the instructions into the controller. One such example of a reading device 1302 in combination with one (or several) data disc(s) 1300 is a hard drive. It should be noted that the computer-readable medium can also be other mediums such as compact discs, digital video discs, flash memories or other memory technologies commonly used.

The instructions 1301 may also be downloaded to a computer data reading device 1304, such as a mobile communications terminal 1304 or other device capable of reading computer coded data on a computer-readable medium, by comprising the instructions 1301 in a computer-readable signal 1303 which is transmitted via a wireless (or wired) interface (for example via the Internet) to the computer data reading device 1304 for loading the instructions 1301 into a controller. In such an embodiment the computer-readable signal 1303 is one type of a computer-readable medium 1300.

The instructions may be stored in a memory (not shown explicitly in figure 13, but referenced 240 in figure 2) of the mobile communications terminal 1304.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

It should be noted that the user inputs providing the commands and/or selections may be received such as touch input or other inputs indicating an object in a graphical user interface, through shortcut key commands, through voice input or any combination thereof.

The teachings herein have mainly been described above with reference to a few embodiments. However, as is readily appreciated by a person skilled in the art, other embodiments than the ones disclosed above are equally possible within the scope of the invention, as defined by the appended patent claims.

## Claims

1. A computing device (100) comprising a memory (240) and a controller (210), wherein said memory (240) is configured to store a plurality of applications (250), each application (250) comprising at least one function (FUNC), and wherein said controller (210) is configured to
receive a selection of a task to be performed through:
receiving a selection of an action;
receiving a selection of a subject/object associated with the selected action; and
receiving a selection of a function associated with the selected
subject/object;
and to
perform said task by causing said function to be executed based on the selected subject/object, wherein selections of the action, the subject/object and the function are received in the order of action, subject/object and function.

2. The computing device (100) of claim 1, wherein the subject/object, the function and the action are categorized based on their associations to each other, wherein the function is associated with the action through a file type handled by the function, and/or the subject/object is associated to the action through a file type of the subject/object.

3. The computing device (100) according to claim 1 or 2, wherein said memory (240) comprises a high-level memory (241) and a low-level memory (242), wherein the controller is configured to load the software instructions for executing the function from a low-level memory (242) into a high-level memory (241) without loading the whole corresponding application (250).

4. The computing device (100) according to claim 1, 2 or 3, wherein said memory (240) comprises a high-level memory (241) and a low-level memory (242) when being dependent on claims 1 or 2, wherein a first function in a first application is linked to a second function in a second application and wherein the controller is configured to load the software instructions for executing the first and the second function from a low-level memory (242) into a high-level memory (241) without loading the whole first application (251) and the whole second application (252).

5. The computing device (100) according to claim 1, 2, 3 or 4, wherein said memory (240) comprises a high-level memory (241) and a low-level memory (242) when being dependent on claims 1 or 2, wherein a first function in a first application is linked to a second function in a second application and wherein the controller is configured to load the software instructions for executing the second function from a low-level memory (242) into a high-level memory (241) without loading the first application (251).

6. The computing device (100) according to any of claims 1 to 5, wherein said selection of said function is received without receiving operator input indicating a traversal of an initial application menu, an initial application menu being without preselected options.

7. The computing device (100) according to any of claims 1 to 6, wherein said controller is further configured to
categorize the function based on the object/subject that the function operates on.

8. The computing device (100) according to claim 7, wherein said controller is further configured to categorize the function based on a type that the function is arranged to operate on.

9. The computing device (100) according to any of claims 1 to 8, wherein said controller (210) is further configured to categorize the object/subject based on a file type.

10. The computing device (100) according to any of claims 1 to 9, wherein said controller (210) is further configured to receive input on a parameter to be used along with or instead of a subject/object for executing the function.

11. The computing device (100) according to any of claims 1 to 10, wherein said controller (210) is configured to
display a reduced set of actions;
receive an indication to display an expanded set, and in response thereto display an expanded set of actions, wherein said reduced set is comprised in said expanded set.

12. The computing device (100) according to any of claims 1 to 11, wherein the computing device (100) is a smartphone (100).

13. A method for use in a computing device (100) comprising a memory (240) and a controller (210), wherein said memory (240) is configured to store a plurality of applications (250), each application (250) comprising at least one function (FUNC), and wherein said method comprises
receiving a selection of a task to be performed through:
receiving a selection of an action;
receiving a selection of a subject/object associated with the selected action; and
receiving a selection of a function associated with the selected
subject/object;
and
performing said task by executing said function based on the selected subject/object, wherein selections of the action, the subject/object and the function are received in the order of action, subject/object and function.

14. A computer-readable storage medium (1300) encoded with instructions (1301) that, when executed on a processor, perform the method according to claim 13.
